# EUROPÄISCHE PATENTANMELDUNG

(11) **EP 4 544 913 A1**
(43) Veröffentlichungstag der Anmeldung: **30.04.2025**
(21) Anmeldenummer: 24208540.5
(22) Anmeldetag: 24.10.2024
(51) Int. Cl.: A21C 3/02

(54) **TEIGROLLER, VERFAHREN ZUR HERSTELLUNG EINES TEIGROLLERS UND VERWENDUNG DES TEIGROLLERS**

(30) Priorität: 25.10.2023 DE 102023210545
(71) Anmelder: WMF GmbH, 73312 Geislingen/Steige (DE)
(72) Erfinder: MANG, Werner, 73312 Geislingen/Steige (DE)
(74) Vertreter: Pfenning, Meinig & Partner mbB

(57) **Zusammenfassung**

Es werden ein Teigroller und ein Verfahren zur Herstellung eines Teigrollers bereitgestellt. Zudem wird eine Verwendung des Teigrollers vorgeschlagen. Der Teigroller enthält eine Teigwalze (1), die entlang einer Längsachse der Teigwalze eine durchgehende Öffnung (2) zur Aufnahme und zur drehbaren Lage-rung eines Rollstabs (3) aufweist, einen in der durchgehenden Öffnung der Teigwalze angeordneten Rollstab, und ein elastisches Element (4), das am Rollstab befestigt ist und dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalze herausgeführt werden kann. Der Teigroller ist dadurch gekennzeichnet, dass die durchgehende Öffnung der Teigwalze einen Hinterschnitt (5) aufweist, in dem das am Rollstab befestigte elastische Element aufgenommen ist.

## Beschreibung

Es werden ein Teigroller und ein Verfahren zur Herstellung eines Teigrollers bereitgestellt. Zudem wird eine Verwendung des Teigrollers vorgeschlagen. Der Teigroller enthält eine Teigwalze, die entlang einer Längsachse der Teigwalze eine durchgehende Öffnung zur Aufnahme und zur drehbaren Lage-rung eines Rollstabs aufweist, einen in der durchgehenden Öffnung der Teigwalze angeordneten Rollstab, und ein elastisches Element, das am Rollstab befestigt ist und dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalze herausgeführt werden kann. DerTeigroller ist dadurch gekennzeichnet, dass die durchgehende Öffnung der Teigwalze einen Hinterschnitt aufweist, in dem das am Rollstab befestigte elastische Element aufgenommen ist.

Teigroller sind in verschiedenen Varianten und aus verschiedenen Materialien bzw. Materialkombinationen vorhanden. Ein Teigroller besteht z.B. aus einer Teigwalze und einer Griffstange (bzw. einem Rollstab) oder mehreren Griffstangen (bzw. mehreren Rollstäben). Durch ein Drücken und Rollen des Rollstabs kann ein knetbarer Teig in verschiedenen Dicken ausgerollt werden.

Bei im Stand der Technik bekannten Teigrollern sind die Griffe des Rollstabs von der Teigwalze nicht abnehmbar. Dies hat den Nachteil, dass die Strukturelemente dieser bekannten Teigroller nicht separat gereinigt, ersetzt und aufbewahrt werden können. Durch das Fehlen der Möglichkeit einer separaten Reinigung können Teile des Teigrollers im Laufe der Zeit verschmutzen, was die die Hygiene bei der Benutzung des Teigrollers negativ beeinträchtigen kann und die Verwendungsdauer (d.h. die Lebenszeit) des Teigrollers verringern kann. Aufgrund des Fehlens der Möglichkeit, einzelne Teile des Teigrollers ersetzen zu können, gestaltet sich die Verwendung des Teigrollers unökonomisch und unökologisch, da im Falle eines Defekts eines Bauteils des Teigrollers der gesamte Teigroller ausgetauscht werden muss. Letztlich benötigen diese bekannten Teigroller mehr Platz bei der Aufbewahrung im Vergleich zu einem Teigroller, der eine Aufbewahrung in Einzelteilen erlaubt

Ausgehend hiervon war es die Aufgabe der vorliegenden Erfindung, einen Teigroller bereitzustellen, der mindestens einen Nachteil der im Stand der Technik bekannten Teigroller vermeidet. Insbesondere sollte der Teigroller eine höhere Verwendungsdauer aufweisen als bekannte Teigroller und/oder hygienischer, ökonomischer und ökologischer benutzbar sein als bekannte Teigroller. Weiterhin sollte es der Teigroller insbesondere ermöglichen, einen minimalen Raum bei seiner Aufbewahrung einzunehmen. Ferner sollte ein Verfahren zur Herstellung des Teigrollers angegeben werden und eine Verwendung des Teigrollers vorgeschlagen werden.

Die Aufgabe wird gelöst durch den Teigroller mit den Merkmalen von Anspruch 1, dem Verfahren mit den Merkmalen von Anspruch 14 und der Verwendung des Teigrollers mit den Merkmalen von Anspruch 15. Die abhängigen Ansprüche zeigen vorteilhafte Ausgestaltungen des erfindungsgemäßen Teigrollers auf.

Erfindungsgemäß wird ein Teigroller bereitgestellt, enthaltend oder bestehend aus:
a) eine Teigwalze, die entlang einer Längsachse der Teigwalze eine durchgehende Öffnung zur Aufnahme und zur drehbaren Lagerung eines Rollstabs aufweist;
b) einen Rollstab, der entlang einer Längsachse des Rollstabs einen Durchmesser aufweist, der kleiner ist als ein Durchmesser der durchgehenden Öffnung der Teigwalze, wobei der Rollstab in der durchgehenden Öffnung der Teigwalze angeordnet ist; und
c) ein elastisches Element, das am Rollstab befestigt ist;
dadurch gekennzeichnet, dass das elastische Element dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalze herausgeführt werden kann, wobei die durchgehende Öffnung der Teigwalze einen Hinterschnitt aufweist, in dem das am Rollstab befestigte elastische Element aufgenommen ist.

Der erfindungsgemäße Teigroller weist eine höhere Verwendungsdauer auf als bekannte Teigroller und lässt sich hygienischer, ökonomischer und ökologischer benutzen als bekannte Teigroller. Ferner ermöglicht es der Teigroller, einen minimalen Raum bei seiner Aufbewahrung einzunehmen. Zudem erlaubt der Teigroller eine hohe Flexibilität beim Ausrollen von Teig, da er eine flexible Kombination unterschiedlicher Rollstäbe mit unterschiedlichen Teigwalzen ermöglicht.

Die Vorteile ergeben sich daraus, dass der Teigroller ein elastisches Element aufweist, das am Rollstab befestigt ist und das dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalze herausgeführt werden kann, sowie daraus, dass die durchgehende Öffnung der Teigwalze einen Hinterschnitt aufweist, in dem das am Rollstab befestigte elastische Element aufnehmbar ist (bzw. im assemblierten Teigroller aufgenommen ist).

Durch diese Eigenschaft des elastischen Elements am Rollstab und des Hinterschnitts an der durchgehenden Öffnung der Teigwalze ist es möglich, den Rollstab mit der Teigwalze auf einfache Art und Weise reversibel zu assemblieren (d.h. zu einem gebrauchsfertigen Teigroller zusammenzubauen) und zu disassemblieren (d.h. in die einzelnen Bauteile des Teigrollers zu zerlegen). Beim Assemblieren des Teigrollers drückt sich das elastische Element beim Einführen des Rollstabs in die durchgehende Öffnung der Teigwalze zusammen und entspannt sich, sobald das elastische Element die Position des Hinterschnitts der Teigwalze erreicht. Durch besagtes Entspannen fixiert das elastische Element den daran befestigten Rollstab innerhalb der Teigwalze. Besagte Fixierung wird auch während eines Ausrollens eines Teiges, d.h. während eines Knetvorganges, aufrechterhalten.

Durch die Merkmale des Teigrollers ist es möglich, den Teigroller einfach und schnell zu disassemblieren, wodurch sich einzelne Bauteile des Teigrollers auf gründlichere Art und Weise reinigen lassen. Damit gestaltet sich die Benutzung des Teigrollers hygienischer und es erhöht sich seine Verwendungsdauer, da mögliche, Schmutz-bedingte Ausfallzeiten und/oder Beschädigungen des Teigrollers reduziert sind bis gänzlich wegfallen. Aufgrund der längeren Lebensdauer des Teigrollers wird die Verwendung des Teigrollers zudem ökonomischer und ökologischer. Zu der ökonomischeren und ökologischeren Verwendung trägt bei, dass sich bei dem erfindungsgemäßen Teigroller auch nur einzelne Bauteile (z.B. nur die Teigwalze oder nur den Rollstab) im Falle einer Beschädigung ersetzen lassen, um einen wieder funktionsfähigen Teigroller zu assemblieren.

Die Möglichkeit zur einfachen und schnellen Disassemblierung des Teigrollers erlaubt es ferner, den Teigroller (im disassemblierten Zustand) auf minimalem Raum aufzubewahren, was insbesondere bei Küchen mit geringem Stauraum einen Vorteil darstellt. Die Anwendung des Teigrollers erlaubt zudem eine hohe Flexibilität seitens des Benutzers. Beispielsweise können mit einem bestimmten Rollstab (anwendungsspezifisch) unterschiedliche Teigwalzen kombiniert werden (z.B. eine Teigwalze mit Holzoberfläche und/oder eine Teigwalze mit Edelstahloberfläche) und/oder mit einer bestimmten Teigwalze (anwenderspezifisch) Rollstäbe mit spezifischen Griffen kombiniert werden (z.B. falls verschiedene Familienmitglieder eine unterschiedliche Griffstärke am Rollstab bevorzugen).

Das elastische Element des Teigrollers kann als elastischer Ring oder als Teil eines elastischen Rings ausgestaltet sein. Als Teil eines elastischen Rings wird bevorzugt ein elastischer Ring verstanden, der über einen bestimmten Kreissektor des Rings offen ist, wobei der bestimmten Kreissektor besonders bevorzugt eine Ausdehnung von >0° bis 180°, insbesondere von 1° bis 90° aufweist. Der Vorteil hierbei ist, dass sich das elastische Element über seine elastische Wirkung am Rollstab (z.B. in einer Nut am Rollstab) befestigen lässt, d.h. das elastische Element stellt über seine Elastizität eine kraftschlüssige Verbindung zum Rollstab her. Dies erlaubt zudem eine einfache Entfernung des elastischen Elements vom Rollstab, z.B. um das elastische Element und/oder den Rollstab ohne das elastische Element zu reinigen. Die Einfachheit der Entfernung ist bei einem Teil des elastischen Rings sogar höher als bei einem elastischen Ring (d.h. als bei einem vollständig geschlossenen Ring).

Das elastische Element kann eine Breite, in einer Richtung entlang der Längsachse des Rollstabs, im Bereich von 2 bis 12 % einer Länge der Teigwalze, aufweisen. Die Breite liegt hierbei bevorzugt im Bereich von 0,5 bis 3 cm. Der Vorteil einer Breite in diesem Bereich ist, dass die Stabilität des assemblierten Teigrollers sehr hoch ist (d.h. die Gefahr einer Disassemblierung beim Ausrollen von Teig mit dem Teigroller gering ist) und andererseits das elastische Element ohne großen Kraftaufwand zusammengedrückt und zusammen mit dem Rollstab in die durchgehende Öffnung der Teigwalze hineingeführt und aus der durchgehenden Öffnung der Teigwalze herausgeführt werden kann.

Das elastische Element kann eine Höhe, in einer Richtung radial zur Längsachse des Rollstabs, im Bereich von 28 bis 60% einer Höhe der Teigwalze aufweisen. Die Länge liegt hierbei bevorzugt im Bereich von 2 bis 4 cm. Der Vorteil einer Höhe in diesem Bereich ist, dass die Stabilität des assemblierten Teigrollers sehr hoch ist (d.h. die Gefahr einer Disassemblierung beim Ausrollen von Teig mit dem Teigroller gering ist) und andererseits das elastische Element ohne großen Kraftaufwand zusammengedrückt und zusammen mit dem Rollstab in die durchgehende Öffnung der Teigwalze hineingeführt und aus der durchgehenden Öffnung der Teigwalze herausgeführt werden kann.

Ferner kann das elastische Element in einem mittleren Abschnitt des Rollstabs angeordnet sein. Bevorzugt ist das elastische Element in einer Nut des Rollstabs angeordnet, die sich im mittleren Abschnitt des Rollstabs befindet. Unter dem mittleren Abschnitt des Rollstabs wird bevorzugt ein Bereich verstanden, der sich über eine Länge von ± 40%, bevorzugt ± 30%, besonders bevorzugt ± 20%, besonders bevorzugt ± 10%, einer Gesamtlänge des Rollstabs weg von der exakten Mitte des Rollstabs entlang seiner Längsachse erstreckt. Der Vorteil besagter Anordnung des elastischen Elements ist, dass die Stabilität des assemblierten Teigrollers höher ist als bei einer Anordnung des elastischen Elements in einem der beiden seitlichen Abschnitte des Rollstabs, d.h. die Gefahr einer Disassemblierung beim Ausrollen von Teig mit dem Teigroller ist geringer.

Das elastische Element kann (in einem assemblierten Zustand des Teigrollers) einen Abstand im Bereich von >0 bis 1 mm zu einer Bodenwandung des Hinterschnitts der durchgehenden Öffnung der Teigwalze aufweisen. Dadurch kontaktiert (bzw. berührt) das elastische Element (im assemblierten Zustand des Teigrollers) die Bodenwandung des Hinterschnitts der durchgehenden Öffnung der Teigwalze nicht. Der Vorteil ist, dass bei einem Ausrollen von Teig mit dem Teigroller keine Reibungskraft zwischen dem elastischen Element und der Bodenwandung des Hinterschnitts auftritt und der Benutzer mit dem Teigroller einen Teig mit weniger Kraftaufwand ausrollen kann.

Ferner kann das elastische Element einen Abstand im Bereich von 0,5 bis 2 mm zu jeweiligen Seitenwandungen des Hinterschnitts der durchgehenden Öffnung der Teigwalze aufweisen. Dadurch wird die Möglichkeit geschaffen, dass das elastische Element (im assemblierten Zustand des Teigrollers) bei einem Ausrollen von Teig durch einen Benutzer des Teigrollers die Seitenwandungen des Hinterschnitts der durchgehenden Öffnung der Teigwalze nicht kontaktiert bzw. nur selten kontaktiert (z.B. im Falle einer axialen Verschiebung des Rollstabs entlang seiner Längsachse relativ zur Teigwalze). Der Vorteil hierbei ist, dass bei einem Ausrollen von Teig mit dem Teigroller keine Reibungskraft (bzw. nur selten im Falle der axialen Verschiebung) zwischen dem elastischen Element und den Seitenwandungen des Hinterschnitts auftritt und der Benutzer mit dem Teigroller einen Teig mit weniger Kraftaufwand ausrollen kann.

Das elastische Element kann kraftschlüssig, formschlüssig und/oder stoffschlüssig mit dem Rollstab verbunden sein. Bevorzugt ist das elastische Element kraftschlüssig über eine elastische Wirkung des elastischen Elements an den Rollstab angeklemmt (bzw. angeclipst), besonders bevorzugt in einer Nut des Rollstabs. Eine kraftschlüssige und/oder formschlüssige Verbindung hat den Vorteil, dass das elastische Element reversibel am Rollstab befestigt ist, d.h. das elastische Element von einem Benutzer des Teigrollers (im disassemblierten Zustand des Teigrollers) vom Rollstab entfernt werden kann. Dadurch lassen sich das elastische Element und der Rollstab ohne das elastische Element separat reinigen, was die Hygiene verbessern kann. Eine stoffschlüssige Verbindung weist diesen Vorteil nicht auf, kann aber den Vorteil einer höheren Verbindungsstabilität aufweisen, was die Langzeitstabilität des Teigrollers erhöhen kann.

Darüber hinaus kann das elastische Element ein Material enthalten oder daraus bestehen, das ausgewählt ist aus der Gruppe bestehend aus Thermoplasten, Metallen, Metalllegierungen, thermoplastischen Elastomeren und Kombinationen hiervon. Thermoplastische Elastomere weisen inhärent elastische Eigenschaften auf. Thermoplasten, Metalle und Metalllegierungen weisen nicht zwangsweise elastische Eigenschaften auf. Diese Materialien können jedoch ein elastisches Element bilden, beispielsweise indem sie eine bestimmte Form aufweisen, die elastische Eigenschaften hat (z.B. die Form einer Feder). Bevorzugt ist das Material ausgewählt aus der Gruppe bestehend aus Silikonen, Kautschuken, thermoplastische Polyurethanen und Kombinationen hiervon. Diese Materialien haben eine inhärente Elastizität. Der Vorteil hierbei ist, dass sie nicht zwangsweise eine Form aufweisen müssen, um ihnen elastische Eigenschaften zu verleihen. Diese Materialien (bzw. thermoplastischen Elastomere im Allgemeinen) können daher in einer Form gewählt werden, die sich leicht und gründlich reinigen lässt (z.B. leichter und gründlicher als z.B. eine Feder), die einen minimalen Raum einnimmt (z.B. einen kleineren Raum als eine Feder) und die eine hohe Stabilität aufweist (z.B. eine höhere Stabilität als eine Feder). Der Teigroller kann somit in kompakterer Bauform bereitgestellt werden, weist eine höhere Langzeitstabilität auf, was ökonomischer und ökologischer ist, und erlaubt eine hygienischere Verwendung.

Die durchgehende Öffnung der Teigwalze kann an einem Eingang und/oder Ausgang der durchgehenden Öffnung einen Durchmesser im Bereich von 2 bis 4 cm aufweisen.

Ferner kann die durchgehende Öffnung der Teigwalze eine sich von einem Eingang und/oder Ausgang in Richtung einer Mitte der durchgehenden Öffnung verjüngende Öffnung aufweisen. Anders ausgedrückt hat dann der Eingang und/oder Ausgang der durchgehenden Öffnung an einem äußersten Rand der Teigwalze einen größeren Durchmesser als an einem weiter in Richtung Mitte derTeigwalze gerichteten Rand der durchgehenden Öffnung. Der Vorteil an der Verjüngung ist, dass das elastische Element und der daran befestigte Rollstab auf einfachere und schnellere Art und Weise in die durchgehende Öffnung der Teigwalze eingeführt werden kann, da eine Komprimierung des elastischen Elements bei diesem Einführen über mehrere Stufen erfolgt (schrittweise Komprimierung). Bevorzugt verjüngt sich die Öffnung am Ausgang und/oder Eingang in Richtung der Mitte der durchgehenden Öffnung linear oder stetig ansteigend. Die stetig ansteigende Verjüngung hat den zusätzlichen Vorteil, dass die stufenweise Komprimierung auf einer geringeren Strecke erfolgt als bei der linear ansteigenden Verjüngung. Damit kann die Ausdehnung der Öffnung entlang dieser Strecke kürzer ausfallen und der Rollstab kann noch stabiler in der durchgehenden Öffnung der Teigwalze angeordnet werden. Die Strecke, über die sich die verjüngende Öffnung erstreckt, liegt besonders bevorzugt im Bereich von 0,1 bis 2 cm entlang einer Längsachse der Teigwalze.

Der Hinterschnitt der durchgehenden Öffnung der Teigwalze kann als Nut in der durchgehenden Öffnung der Teigwalze ausgestaltet sein, optional als Nut mit abgeflachten und/oder runden Seitenkanten. Abgeflachte oder runde Seitenkanten an dieser Nut haben den Vorteil, dass das elastische Element und der daran befestigte Rollstab auf leichtere Art und Weise aus der durchgehenden Öffnung der Teigwalze entfernt werden können (d.h. hierfür ist ein geringerer Kraftaufwand nötig).

Ferner kann der Hinterschnitt der durchgehenden Öffnung der Teigwalze eine Breite, in einer Richtung entlang der Längsachse der durchgehenden Öffnung, aufweisen, die im Bereich von 1 bis 4 mm größer ist als eine Breite des elastischen Elements. Die etwas größere Breite als die Breite des elastischen Elements erlaubt es, das elastische Element, das am Rollstab befestigt ist, leichter und zuverlässiger in dem Hinterschnitt anzuordnen, wenn der Teigroller assembliert wird, da mehr Raum zur Aufnahme des elastischen Elements zur Verfügung steht. Ferner ist die Breite nicht zu hoch, um eine axiale Beweglichkeit des Rollstabs innerhalb der durchgehenden Öffnung derTeigwalze zu limitieren und eine von einem Benutzer absichtlich gewünschte axiale Bewegung der Teigwalze des Teigrollers direkter (d.h. mit weniger Spiel) zu gestalten, was die Präzision einer Benutzung des Teigrollers erhöht.

Abgesehen davon kann der Hinterschnitt der durchgehenden Öffnung derTeigwalze eine Tiefe, in einer Richtung radial zur Längsachse der durchgehenden Öffnung, aufweisen, die im Bereich von >0 bis 1 mm größer ist als eine Höhe des elastischen Elements gegenüber einer Oberfläche des Rollstabs, die von seinem Durchmesser definiert wird. Eine Tiefe in diesem Bereich hat den Vorteil, dass eine Bodenwandung des Hinterschnitts das elastische Element (im assemblierten Zustand des Teigrollers) nicht kontaktiert bzw. nicht berührt, was Reibungskräfte bei einem Ausrollen von Teig mit dem Teigroller minimiert und der Benutzer einen Teig mit weniger Kraftaufwand ausrollen kann.

Darüber hinaus kann der Hinterschnitt der durchgehenden Öffnung der Teigwalze in einem mittleren Abschnitt der durchgehenden Öffnung angeordnet sein. Unter dem mittleren Abschnitt der durchgehenden Öffnung wird bevorzugt ein Bereich verstanden, der sich über eine Länge von ± 40%, bevorzugt ± 30%, besonders bevorzugt ± 20%, besonders bevorzugt ± 10%, einer Gesamtlänge der durchgehenden Öffnung weg von der exakten Mitte der durchgehenden Öffnung der Teigwalze entlang ihrer Längsachse erstreckt. Der Vorteil ist, dass die Stabilität des assemblierten Teigrollers höher ist als bei einer Anordnung des Hinterschnitts in einem der beiden seitlichen Abschnitte der Teigwalze, d.h. die Gefahr einer Disassemblierung beim Ausrollen von Teig mit dem Teigroller ist geringer.

Eine Oberfläche der durchgehenden Öffnung der Teigwalze (innere Oberfläche der Teigwalze) kann ein Material enthalten oder daraus bestehen, das ausgewählt ist aus der Gruppe bestehend aus Kunststoff, Metall, Metalllegierung (z.B. Edelstahl) und Kombinationen hiervon. Edelstahl ist besonders bevorzugt, da es mechanisch sehr stabil ist, sehr stabil gegenüber Reinigungsmitteln ist und einen geringen Reibungswiderstand erzeugt.

Ferner kann eine Oberfläche eines Mantels der Teigwalze (äußere Oberfläche der Teigwalze) ein Material enthalten oder daraus bestehen, das ausgewählt ist aus der Gruppe bestehend aus Kunststoff (z.B. Silikon), Holz, Metall, Metalllegierung (z.B. Edelstahl) und Kombinationen hiervon. Kunststoff (z.B. Silikon) und/oder Holz sind bevorzugt, da diese Materialien eine hohe Stabilität gegenüber Reinigungsmitteln aufweisen und sich ihre Oberfläche hervorragend zum Ausrollen eines Teiges eignet.

Der Rollstab kann an einem ersten Ende und/oder an einem zweiten Ende des Rollstabs einen Durchmesser im Bereich von 1,0 bis <4 cm, bevorzugt 2,0 bis 3,5 cm, aufweisen, wobei der Durchmesser kleiner ist als ein Durchmesser der durchgehenden Öffnung der Teigwalze. Größere Durchmesser haben den Vorteil, dass die mechanische Stabilität des Rollstabs und damit des gesamten Teigrollers höher ist als bei kleineren Durchmessern.

Der mittlere Abschnitt des Rollstabs kann eine Nut aufweisen, optional eine Nut mit abgeflachten und/oder runden Seitenkanten. Abgeflachte und/oder runde Seitenkanten haben den Vorteil, dass sich das elastische Element, das sich im assemblierten Zustand in der Nut des Rollstabs befinden kann, auf leichtere Art und Weise, d.h. mit weniger Kraftaufwand, aus der Nut des Rollstabs entfernen lässt, wodurch eine separate Reinigung des elastischen Elements und des Rollstabs ohne elastisches Element auf leichtere Art und Weise erfolgen kann.

Ferner kann die Nut des Rollstabs eine Breite, in einer Richtung entlang der Längsachse des Rollstabs, aufweisen, die im Bereich von 1 bis 4 mm größer ist als eine Breite des elastischen Elements. Der Vorteil hierbei ist, dass zwischen der Nut des Rollstabs und dem elastischen Element bei der Drehbewegung des Teigrollers kleinere Reibungskräfte wirken und damit die Drehbewegung für einen Benutzer leichter durchgeführt werden kann. Zudem kann ein Benutzer das elastische Element einfacher an der Nut des Rollstabs montieren und demontieren und damit das elastische Element und den Rollstab schneller und einfacher gründlich reinigen.

Abgesehen davon kann die Nut des Rollstabs (d.h. der Rollstab im Bereich der Nut) einen Durchmesser aufweisen, der im Bereich von 2 bis 4 mm kleiner ist als ein Innendurchmesser des elastischen Elements. Ein Vorteil hiervon ist, dass sich das elastische Element bei einem Einführen des Rollstabs (mit dem elastischen Element) in die Teigrolle leichter zusammendrücken lässt. Ferner wird durch dieses Merkmal ein "Spiel" zwischen der Nut des Rollstabs und einer der Nut zugewandten Oberfläche des elastischen Elements erzeugt, das eine Drehbewegung des Teigrollers bei geringer Reibung ermöglicht, d.h. die Drehbewegung des Teigrollers wird für einen Benutzer leichter durchführbar. Weiterhin wird durch dieses "Spiel" die Montage des elastischen Elements am Rollstab bzw. dessen Demontage vom Rollstab erleichtert.

Darüber hinaus kann die Nut des Rollstabs in einem mittleren Abschnitt des Rollstabs angeordnet sein. Der Vorteil ist, dass die Stabilität des assemblierten Teigrollers höher ist als bei einer Anordnung des Nut in einem der beiden seitlichen Abschnitte des Rollstabs, d.h. die Gefahr einer Disassemblierung beim Ausrollen von Teig mit dem Teigroller ist geringer. Unter dem mittleren Abschnitt des Rollstabs wird bevorzugt ein Bereich des Rollstabs verstanden, der sich über eine Länge von ± 40%, bevorzugt ± 30%, besonders bevorzugt ± 20%, besonders bevorzugt ± 10%, einer Gesamtlänge des Rollstabs weg von der exakten Mitte des Rollstabs entlang seiner Längsachse erstreckt.

Der Rollstab kann ein Material enthalten oder daraus bestehen, das ausgewählt ist aus der Gruppe bestehend aus Kunststoff, Holz, Metall, Metalllegierung (z.B. Edelstahl) und Kombinationen hiervon. Edelstahl ist besonders bevorzugt, da es mechanisch sehr stabil ist, sehr stabil gegenüber Reinigungsmitteln ist und einen geringen Reibungswiderstand erzeugt. Der Rollstab kann an seinen beiden seitlichen Enden einen Griff aufweisen. Der Griff kann beispielsweise ein Material enthalten oder daraus bestehen, das ausgewählt ist aus der Gruppe bestehend aus Kunststoff, Holz, Metall, Metalllegierung (z.B. Edelstahl) und Kombinationen hiervon. Zudem kann der Griff ein zum Rollstab unterschiedliches Material enthalten oder daraus bestehen, z.B. Kunststoff und/oder Holz, falls der Rollstab beispielsweise Edelstahl enthält oder daraus besteht.

Ferner wird erfindungsgemäß ein Verfahren zur Herstellung eines Teigrollers bereitgestellt, umfassend oder bestehend aus:
a) Bereitstellen einer Teigwalze, die entlang einer Längsachse der Teigwalze eine durchgehende Öffnung zur Aufnahme und drehbaren Lagerung eines Rollstabs aufweist, wobei die durchgehende Öffnung der Teigwalze einen Hinterschnitt aufweist, der zur Aufnahme eines am Rollstab befestigten elastischen Elements geeignet ist;
b) Bereitstellen eines Rollstabs, der entlang einer Längsachse des Rollstabs einen Durchmesser aufweist, der kleiner ist als ein Durchmesser der durchgehenden Öffnung der Teigwalze;
c) Befestigen eines elastischen Elements am Rollstab, wobei das elastische Element dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalz herausgeführt werden kann; und
d) Einführen des Rollstabs in die durchgehende Öffnung der Teigwalze unter Krafteinwirkung, bis das am Rollstab befestigte elastische Element in einem Hinterschnitt der durchgehenden Öffnung der Teigwalze aufgenommen ist.

Der mit dem erfindungsgemäßen Verfahren herstellbare Teigroller weist eine höhere Verwendungsdauer auf als bekannte Teigroller und lässt sich hygienischer, ökonomischer und ökologischer benutzen als bekannte Teigroller. Ferner ermöglicht es der Teigroller, einen minimalen Raum bei seiner Aufbewahrung einzunehmen. Zudem erlaubt der Teigroller eine hohe Flexibilität beim Ausrollen von Teig, da er eine flexible Kombination unterschiedlicher Rollstäbe mit unterschiedlichen Teigwalzen erlaubt.

Das erfindungsgemäße Verfahren ist bevorzugt ein Verfahren zur Herstellung eines erfindungsgemäßen Teigrollers.

Zudem wird erfindungsgemäß die Verwendung des erfindungsgemäßen Teigrollers zum Ausrollen eines Teiges vorgeschlagen.

Anhand der nachfolgenden Figuren soll der erfindungsgemäße Gegenstand näher erläutert werden, ohne diesen auf die hier dargestellten, spezifischen Ausgestaltungsformen einschränken zu wollen.

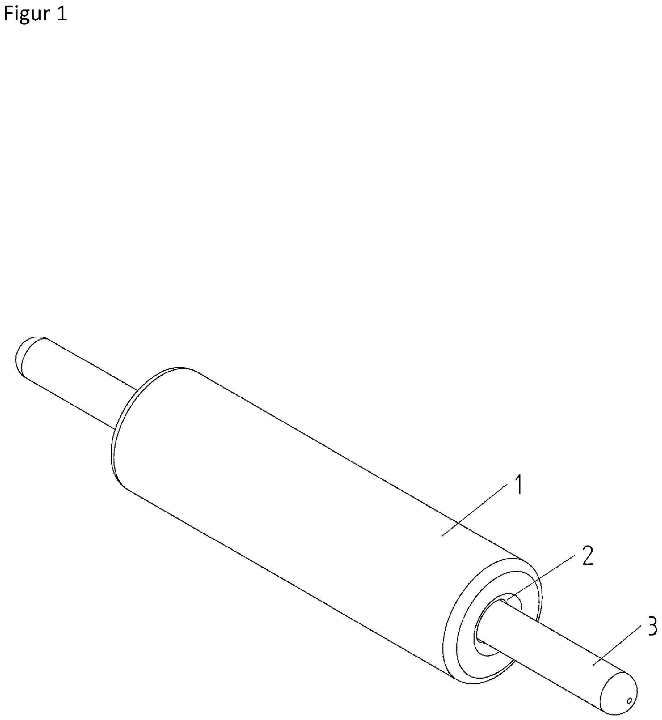

Figur 1 zeigt eine erfindungsgemäße Teigrolle. Die Teigrolle enthält eine Teigwalze 1, die entlang einer Längsachse der Teigwalze 1 eine durchgehende Öffnung 2 zur Aufnahme und zur drehbaren Lagerung eines Rollstabs 3 aufweist. Ferner enthält die Teigrolle einen Rollstab 3, der entlang einer Längsachse des Rollstabs 3 einen Durchmesser aufweist, der kleiner ist als ein Durchmesser der durchgehenden Öffnung 2 der Teigwalze, wobei der Rollstab 3 in der durchgehenden Öffnung 2 der Teigwalze 1 angeordnet ist. Darüber hinaus enthält die Teigrolle ein elastisches Element (hier nicht dargestellt), das am Rollstab 3 befestigt ist. Das elastische Element ist dazu geeignet ist, sich unter Krafteinwirkung dergestalt zu verformen, dass der Rollstab 3 zusammen mit dem am Rollstab 3 befestigten elastischen Element in die durchgehende Öffnung 2 der Teigwalze 1 hineingeführt und aus der durchgehenden Öffnung 2 der Teigwalze 1 herausgeführt werden kann. Hierbei weist die durchgehende Öffnung derTeigwalze 2 einen Hinterschnitt auf (hier nicht dargestellt), in dem das am Rollstab 3 befestigte elastische Element aufgenommen ist.

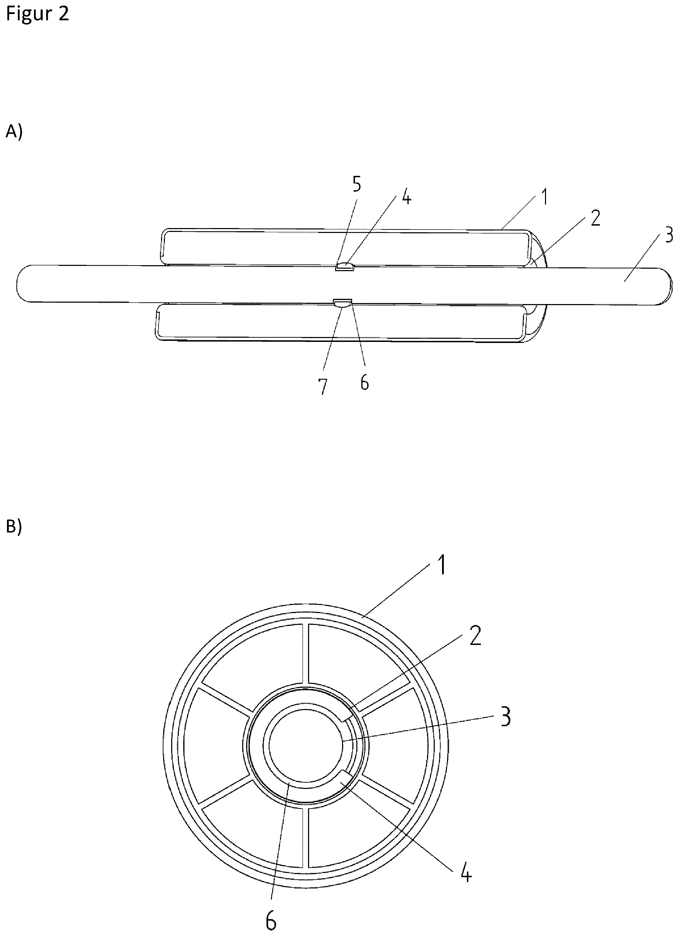

Figur 2 zeigt einen Querschnitt entlang der Längsachse der Teigwalze 1 einer erfindungsgemäßen Teigrolle (Figur 2A) und einen Querschnitt entlang einer Richtung radial zu der Längsachse der Teigwalze 1 einer erfindungsgemäßen Teigrolle (Figur 2B). In den Figuren 2A und 2B ist erkennbar, dass das elastische Element 4 als Teil eines elastischen Rings ausgestaltet ist, der über eine Ausdehnung eines Kreissektors des Rings von ca. 60° offen ist. Das elastische Element 4 ist hierbei in einer Nut 6 des Rollstabs 3 angeordnet und über diese mit dem Rollstab 3 befestigt, die sich in einem mittleren Abschnitt des Rollstabs 3 befindet. Dem elastischen Element 4 gegenüber liegt der Hinterschnitt 5 der durchgehenden Öffnung 2 der Teigwalze 1. Es wird deutlich, dass die Anordnung des elastischen Elements 4 des Rollstabs 3 in dem Hinterschnitt 5 der durchgehenden Öffnung 2 derTeigwalze 1 sicherstellt, dass der Rollstab 3 stabil in der Teigwalze 1 angeordnet ist, d.h. eine Beweglichkeit des Rollstabs 3 in einer Richtung entlang der Längsachse derTeigwalze 1 (bzw. des Rollstabs 3) wird durch das elastische Element 4 eingeschränkt und es erfordert einen gewissen Kraftaufwand, den Rollstab 3 gegen die elastische Kraft des elastischen Elements 4 wieder aus der durchgehenden Öffnung 2 der Teigwalze zu entfernen. Es ist auch erkennbar, dass das elastische Element 4 einen gewissen Abstand zu einer Bodenwandung des Hinterschnitts 5 aufweist. Dies ermöglicht es für einen Benutzer derTeigrolle, die Teigwalze 1 mit einem minimalen Kraftaufwand um ihre Längsachse zu drehen und damit einen Teig auszurollen.

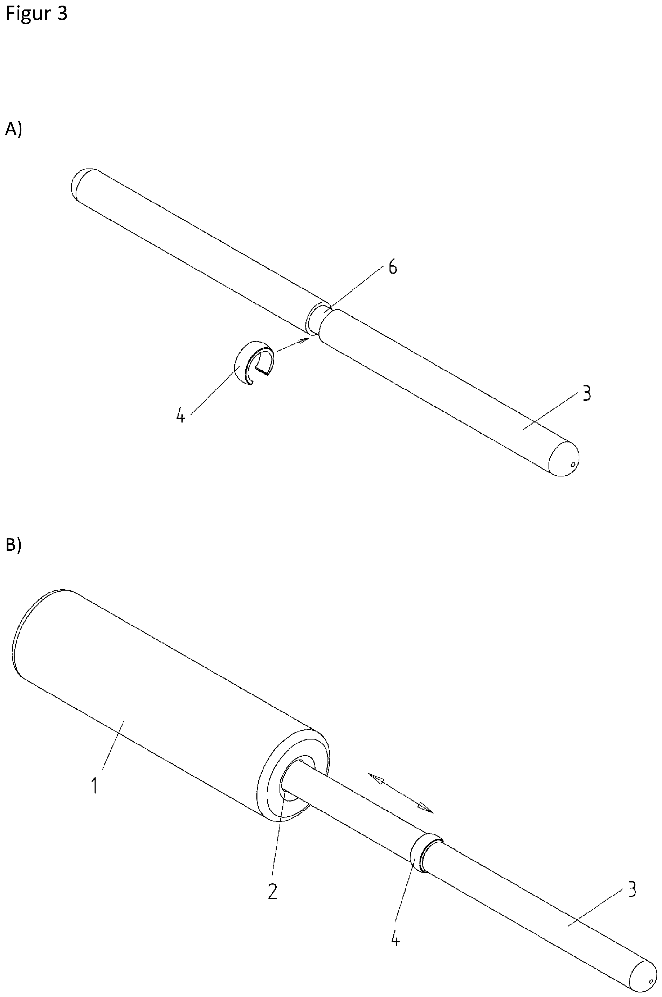

Figur 3 zeigt zwei Schritte des erfindungsgemäßen Verfahrens. In Figur 3A ist die Bereitstellung eines Rollstabs 3 dargestellt, der entlang einer Längsachse des Rollstabs einen Durchmesser aufweist, der kleiner ist als ein Durchmesser einer durchgehenden Öffnung einer Teigwalze, und das Befestigen eines elastischen Elements 4 am Rollstab 3, hier in einer Nut 6 des Rollstabs 3, dargestellt. Das elastische Element 4 ist dazu geeignet ist, sich unter Krafteinwirkung dergestalt zu verformen, dass der Rollstab 3 zusammen mit dem am Rollstab 3 befestigten elastischen Element 4 in eine durchgehende Öffnung einer Teigwalze hineingeführt und aus der durchgehenden Öffnung derTeigwalz herausgeführt werden kann. In Figur 3B ist der Schritt dargestellt, in dem der Rollstabs 3 mit dem daran befestigten elastischen Element 4 in die durchgehende Öffnung 2 (die hier eine sich verjüngende Öffnung ist) unter Krafteinwirkung eingeführt wird, bis das am Rollstab 3 befestigte elastische Element 4 in einem Hinterschnitt (hier nicht gezeigt) der durchgehenden Öffnung 2 der Teigwalze 1 aufgenommen ist. Hierfür ist lediglich so viel Kraft nötig, um das elastische Element 4 an der durchgehenden Öffnung 2 zu komprimieren, was die sich verjüngende Öffnung erleichtert (Überwindung einer elastischen Kraft des elastischen Elements 4) und das elastische Element innerhalb der durchgehenden Öffnung 2 bis zu dem Hinterschnitt der Teigwalze 1 zu bewegen (Überwindung einer Reibungskraft zwischen dem elastischen Element 4 und einer Oberfläche der durchgehenden Öffnung 2). Im Hinterschnitt derTeigwalze 1 angekommen entspannt sich das elastische Element und stellt einer axialen Bewegung des Rollstabs 3 einen Widerstand entgegen. Der Pfeil in Figur 3B deutet zudem an, dass besagte Assemblierung des erfindungsgemäßen Teigrollers auch leicht über Krafteinwirkung reversibel ist, d.h. der Rollstab 3 mit dem daran befestigten elastischen Element 4 unter Krafteinwirkung auch aus der durchgehende Öffnung 2 der Teigwalze 1 herausgeführt werden kann. Hierfür ist lediglich so viel Kraft nötig, um das elastische Element 4 am Hinterschnitt der Teigwalze 1 zu komprimieren und in den zum Hinterschnitt benachbarten Abschnitt der durchgehenden Öffnung 2 eintreten zu lassen (Überwindung einer elastischen Kraft des elastischen Elements 4) sowie das elastische Element innerhalb dieses benachbarten Abschnitts bis zu einem der beiden Ausgänge (bzw. Eingänge) der durchgehenden Öffnung 2 der Teigwalze 1 zu bewegen (Überwindung einer Reibungskraft zwischen dem elastischen Element 4 und einer Oberfläche der durchgehenden Öffnung 2). Damit lässt sich der erfindungsgemäße Teigroller einfach und mit geringer Krafteinwirkung assemblieren und disassemblieren.

### Bezugszeichenliste

- 1:: Teigwalze;
- 2:: durchgehende Öffnung der Teigwalze;
- 3:: Rollstab;
- 4:: elastisches Element (z.B. Teil eines elastischen Rings)
- 5:: Hinterschnitt der durchgehenden Öffnung der Teigwalze;
- 6:: Nut (des Rollstabs);
- 7:: Bodenwandung des Hinterschnitts.

## Patentansprüche

1. Teigroller, enthaltend oder bestehend aus:
a) eine Teigwalze, die entlang einer Längsachse der Teigwalze eine durchgehende Öffnung zur Aufnahme und zur drehbaren Lagerung eines Rollstabs aufweist;
b) einen Rollstab, der entlang einer Längsachse des Rollstabs einen Durchmesser aufweist, der kleiner ist als ein Durchmesser der durchgehenden Öffnung der Teigwalze, wobei der Rollstab in der durchgehenden Öffnung der Teigwalze angeordnet ist; und
c) ein elastisches Element, das am Rollstab befestigt ist;
**dadurch gekennzeichnet, dass** das elastische Element dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalze herausgeführt werden kann, wobei die durchgehende Öffnung der Teigwalze einen Hinterschnitt aufweist, in dem das am Rollstab befestigte elastische Element aufgenommen ist.

2. Teigroller gemäß dem vorhergehenden Anspruch, **dadurch gekennzeichnet, dass** das elastische Element als elastischer Ring oder als Teil eines elastischen Rings ausgestaltet ist, wobei als Teil eines elastischen Rings bevorzugt ein elastischer Ring verstanden wird, der über eine Ausdehnung eines bestimmten Kreissektors des Rings offen ist, wobei der bestimmten Kreissektor besonders bevorzugt eine Ausdehnung von >0° bis 180°, insbesondere von 1° bis 90°, aufweist.

3. Teigroller gemäß einem der vorhergehenden Ansprüche, **dadurch gekennzeichnet, dass** das elastische Element
i) eine Breite, in einer Richtung entlang der Längsachse des Rollstabs, im Bereich von 2 bis 12 % einer Länge der Teigwalze, aufweist, wobei die Breite bevorzugt im Bereich von 0,5 bis 3 cm liegt; und/oder
ii) eine Höhe, in einer Richtung radial zur Längsachse des Rollstabs, im Bereich von 28 bis 60% einer Höhe der Teigwalze aufweist, wobei die Länge bevorzugt im Bereich von 2 bis 4 cm liegt.

4. Teigroller gemäß einem der vorhergehenden Ansprüche, **dadurch gekennzeichnet, dass** das elastische Element in einem mittleren Abschnitt des Rollstabs angeordnet ist, bevorzugt in einer Nut des Rollstabs angeordnet ist, die sich im mittleren Abschnitt des Rollstabs befindet, wobei unter dem mittleren Abschnitt des Rollstabs bevorzugt ein Bereich verstanden wird, der sich über eine Länge von ± 40%, bevorzugt ± 30%, besonders bevorzugt ± 20%, besonders bevorzugt ± 10%, einer Gesamtlänge des Rollstabs weg von der exakten Mitte des Rollstabs entlang seiner Längsachse erstreckt.

5. Teigroller gemäß einem der vorhergehenden Ansprüche, **dadurch gekennzeichnet, dass** das elastische Element
i) einen Abstand im Bereich von >0 bis 1 mm zu einer Bodenwandung des Hinterschnitts der durchgehenden Öffnung der Teigwalze aufweist; und/oder
ii) einen Abstand im Bereich von 0,5 bis 2 mm zu jeweiligen Seitenwandungen des Hinterschnitts der durchgehenden Öffnung der Teigwalze aufweist.

6. Teigroller gemäß einem der vorhergehenden Ansprüche, **dadurch gekennzeichnet, dass** das elastische Element kraftschlüssig, formschlüssig und/oder stoffschlüssig mit dem Rollstab verbunden ist, bevorzugt kraftschlüssig über eine elastische Wirkung des elastischen Elements an den Rollstab angeklemmt ist, besonders bevorzugt in einer Nut des Rollstabs.

7. Teigroller gemäß einem der vorhergehenden Ansprüche, **dadurch gekennzeichnet, dass** das elastische Element ein Material enthält oder daraus besteht, das ausgewählt ist aus der Gruppe bestehend aus Thermoplasten, Metallen, Metalllegierungen, thermoplastischen Elastomeren und Kombinationen hiervon, wobei das Material bevorzugt ausgewählt ist aus der Gruppe bestehend aus Silikonen, Kautschuken, thermoplastische Polyurethanen und Kombinationen hiervon.

8. Teigroller gemäß einem der vorhergehenden Ansprüche, **dadurch gekennzeichnet, dass** die durchgehende Öffnung der Teigwalze
i) an einem Eingang und/oder Ausgang der durchgehenden Öffnung einen Durchmesser im Bereich von 2 bis 4 cm aufweist; und/oder
ii) eine sich von einem Eingang und/oder Ausgang in Richtung einer Mitte der durchgehenden Öffnung verjüngende Öffnung aufweist, wobei sich die Öffnung am Ausgang und/oder Eingang in Richtung der Mitte der durchgehenden Öffnung bevorzugt linear oder stetig ansteigend verjüngt, besonders bevorzugt über eine Strecke im Bereich von 0,1 bis 2 cm entlang einer Längsachse der Teigwalze.

9. Teigroller gemäß einem der vorhergehenden Ansprüche, **dadurch gekennzeichnet, dass** der Hinterschnitt der durchgehenden Öffnung
i) als Nut in der durchgehenden Öffnung ausgestaltet ist, optional als Nut mit abgeflachten und/oder runden Seitenkanten; und/oder
ii) eine Breite, in einer Richtung entlang der Längsachse der durchgehenden Öffnung, aufweist, die im Bereich von 1 bis 4 mm größer ist als eine Breite des elastischen Elements; und/oder
iii) eine Tiefe, in einer Richtung radial zur Längsachse der durchgehenden Öffnung, aufweist, die im Bereich von >0 bis 1 mm größer ist als eine Höhe des elastischen Elements gegenüber einer Oberfläche des Rollstabs, die von seinem Durchmesser definiert wird; und/oder
iv) in einem mittleren Abschnitt der durchgehenden Öffnung angeordnet ist, wobei unter dem mittleren Abschnitt der durchgehenden Öffnung ein Bereich verstanden wird, der sich über eine Länge von ± 40%, bevorzugt ± 30%, besonders bevorzugt ± 20%, besonders bevorzugt ± 10%, einer Gesamtlänge der durchgehenden Öffnung weg von der exakten Mitte der durchgehenden Öffnung entlang ihrer Längsachse erstreckt.

10. Teigroller gemäß einem der vorhergehenden Ansprüche, **dadurch gekennzeichnet, dass** eine Oberfläche
i) der durchgehenden Öffnung der Teigwalze ein Material enthält oder daraus besteht, das ausgewählt ist aus der Gruppe bestehend aus Kunststoff, Metall, Metalllegierung und Kombinationen hiervon; und/oder
ii) eines Mantels der Teigwalze ein Material enthält oder daraus besteht, das ausgewählt ist aus der Gruppe bestehend aus Kunststoff, Holz, Metall, Metalllegierung und Kombinationen hiervon.

11. Teigroller gemäß einem der vorhergehenden Ansprüche, **dadurch gekennzeichnet, dass** der Rollstab an einem ersten Ende und/oder an einem zweiten Ende des Rollstabs einen Durchmesser im Bereich von 1,0 bis <4 cm, bevorzugt 2,0 bis 3,5 cm, aufweist.

12. Teigroller gemäß einem der vorhergehenden Ansprüche, **dadurch gekennzeichnet, dass** der mittlere Abschnitt des Rollstabs eine Nut aufweist, optional eine Nut mit abgeflachten und/oder runden Seitenkanten, wobei die Nut des Rollstabs bevorzugt
i) eine Breite, in einer Richtung entlang der Längsachse des Rollstabs, aufweist, die im Bereich von 1 bis 4 mm größer ist als eine Breite des elastischen Elements; und/oder
ii) einen Durchmesser aufweist, der im Bereich von 2 bis 4 mm kleiner ist als ein Innendurchmesser des elastischen Elements; und/oder
iii) in einem mittleren Abschnitt des Rollstabs angeordnet ist, wobei unter dem mittleren Abschnitt des Rollstabs ein Bereich des Rollstabs verstanden wird, der sich über eine Länge von ± 40%, bevorzugt ± 30%, besonders bevorzugt ± 20%, besonders bevorzugt ± 10%, einer Gesamtlänge des Rollstabs weg von der exakten Mitte des Rollstabs entlang seiner Längsachse erstreckt.

13. Teigroller gemäß einem der vorhergehenden Ansprüche, **dadurch gekennzeichnet, dass** der Rollstab ein Material enthält oder daraus besteht, das ausgewählt ist aus der Gruppe bestehend aus Kunststoff, Holz, Metall und Kombinationen hiervon.

14. Verfahren zur Herstellung eines Teigrollers, umfassend oder bestehend aus:
a) Bereitstellen einer Teigwalze, die entlang einer Längsachse der Teigwalze eine durchgehende Öffnung zur Aufnahme und drehbaren Lagerung eines Rollstabs aufweist, wobei die durchgehende Öffnung der Teigwalze einen Hinterschnitt aufweist, der zur Aufnahme eines am Rollstab befestigten elastischen Elements geeignet ist;
b) Bereitstellen eines Rollstabs, der entlang einer Längsachse des Rollstabs einen Durchmesser aufweist, der kleiner ist als ein Durchmesser der durchgehenden Öffnung der Teigwalze;
c) Befestigen eines elastischen Elements am Rollstab, wobei das elastische Element dazu geeignet ist, sich unter Krafteinwirkung dergestalt zu verformen, dass der Rollstab zusammen mit dem am Rollstab befestigten elastischen Element in die durchgehende Öffnung der Teigwalze hineingeführt und aus der durchgehenden Öffnung der Teigwalz herausgeführt werden kann; und
d) Einführen des Rollstabs in die durchgehende Öffnung der Teigwalze unter Krafteinwirkung, bis das am Rollstab befestigte elastische Element in einem Hinterschnitt der durchgehenden Öffnung der Teigwalze aufgenommen ist.

15. Verwendung des Teigrollers gemäß einem der Ansprüche 1 bis 13 zum Ausrollen eines Teiges.
